# EUROPEAN PATENT APPLICATION

(11) **EP 4 745 012 A1**
(43) Date of publication of application: **20.05.2026**
(21) Application number: 25151912.0
(22) Date of filing: 15.01.2025
(51) Int. Cl.: B62H 5/00, B62K 19/36, B62K 19/40, B62K 3/04

(54) **MAIN BEAM TUBE WITH BUILT-IN LOCK**

(30) Priority: 15.11.2024 CN 202422779569 U; 15.11.2024 CN 202422779430 U; 19.12.2024 CN 202423140852 U
(71) Applicant: Shenzhen Fiido Technology Development Co., Ltd, Shenzhen, Guangdong 518110 (CN)
(72) Inventor: WANG, Zhikai, Shenzhen, 518110 (CN)
(74) Representative: Metida

(57) **Abstract**

A main beam tube with a built-in lock includes a body (10), a lock and a lock rope releasing mechanism. The body is provided with a seat tube mounting base (121). The lock includes a lock head (23), a lock rope (22) and a main lock body (21). The main lock body is provided with a lock head hole (211), a locking hole (212) and a lock tongue cavity (213). The lock head hole is used for accommodating the lock head. When the lock head protrudes from the lock head hole and is inserted into the locking hole, a lock tongue (214) is capable of locking the lock head in the locking hole. The lock head is provided at one end of the lock rope, and the other end of the lock rope is fixed. The lock rope is provided in the cavity of the body. The lock rope releasing mechanism is used for releasing or retracting the lock rope.

## Description

### TECHNICAL FIELD

The present disclosure relates to the technical field of frame parts, and in particular to a main beam tube with a built-in lock.

### BACKGROUND

At present, most of the mobility vehicles on the market, such as scooters, bicycles and electric bicycles, achieve the anti-theft function by mounting locks. Most of the existing traditional vehicle body locks are separate individual items, usually chain locks or U-shaped locks, which are uneasy to carry, and are easy to be lost when separated from the vehicle body, resulting in economic losses.

For example, Chinese Patent Document No. CN106240681A discloses a method of a bicycle seat branch tube with a built-in lock, which integrates the functions of the bicycle seat branch tube and the lock, connects the tail end of the soft lock through the built-in tension spring, hides a part of the lock body in the main tube, pulls out the lock body when in use, and then automatically retracts the lock body back into the main tube after use. Because the lock head and the lock tongue are not properly provided, the lock head and the lock tongue will vibrate during the riding process due to being exposed to the bicycle seat branch tube. Moreover, since the lock head and the lock tongue are exposed to the outside for a long time, dew or rainwater may cause the lock head and the lock tongue to rust and result in poor locking connection.

Chinese Patent Document No. CN205677378U discloses a hidden bicycle lock device, which includes a tension spring with the lower end fixed in a lower tube of a bicycle frame, a chain movably accommodated in an upper tube of the bicycle frame, a connecting wire with both ends connected with the tension spring and the chain, respectively, a lock head fixed at the outer end of the chain, and a latching head fixed at the outer side of the bicycle frame and locked with a latching hole on the lock head. The rear end of the upper tube of the bicycle frame is provided with a lock outlet hole. The upper tube of the bicycle frame is provide with a latching ring at the front side of the lock outlet hole. A latching part is provided at one end of the chain close to the connecting line. The latching part and the lock head are provided at two sides by the latching ring. According to the technical scheme disclosed in this patent, the chain and the lock head fixed at the outer end of the chain are provided in the upper tube of the bicycle frame. The chain and the lock head at the outer end of the chain can be protected, preventing the chain and the lock head at the outer end of the chain from being eroded by the sun, rain and environment. However, the latching head is exposed and is easily damaged by a strong force or eroded by the external environment.

### SUMMARY

The present disclosure aims to provide a main beam tube with a built-in lock. The main beam tube with the built-in lock pulls a lock rope to be completely retracted into the main beam tube by a driving motor, which is excellent in concealment effect, uneasy to be damaged, excellent in practicability and longer in service life.

The technical scheme used by the main beam tube with the built-in lock according to the present disclosure is as follows.

A main beam tube with a built-in lock is provided, including a body, wherein the body is provided with a seat tube mounting base, a cavity is provided in the body; and further including a lock and a lock rope releasing mechanism, wherein the lock and the lock rope releasing mechanism are provided in the body, the lock includes a lock head, a lock rope and a main lock body, the main lock body is provided at one end of the body, the main lock body is provided with a lock head hole, a locking hole and a lock tongue cavity, the lock head hole is used for accommodating the lock head, the lock tongue cavity is provided with a lock tongue, when the lock head protrudes from the lock head hole and is inserted into the locking hole, the lock tongue is capable of locking the lock head in the locking hole, the lock head is provided at one end of the lock rope, the other end of the lock rope is fixed, the lock rope is provided in the cavity of the body, and the lock rope releasing mechanism is used for releasing or retracting the lock rope.

As a preferred scheme, the lock rope releasing mechanism includes a driving motor and a take-up reel, the driving motor is used for driving the take-up reel, when the lock head drives the lock rope to protrude from the cavity, the driving motor is used for driving the take-up reel to release the lock rope, and when the lock rope needs to be retracted in the cavity, the driving motor is used for driving the take-up reel to retract the lock rope.

As a preferred scheme, a fixed seat is provided at the other end of the body, the driving motor and the take-up reel are provided at the end of the body which is provided with the fixed seat, and the lock rope is wound around the take-up reel.

As a preferred scheme, the seat tube mounting base is provided with a fixed pulley, and the fixed pulley is used for guiding the lock rope.

As a preferred scheme, the main beam tube with the built-in lock further includes a fixed pulley and a movable pulley, wherein the fixed pulley and the take-up reel are located at both ends of the body, respectively, the movable pulley is slidably provided in the body, a pulling rope is wound around the take-up reel, the movable pulley is fixed at one end of the pulling rope, and the take-up reel pulls or loosens the movable pulley through the pulling rope.

As a preferred scheme, the body includes an outer tube body and a mounting plate, the mounting plate is fixedly provided in the tube body, the mounting plate is provided with a sliding rail, and the movable pulley is slidably provided on the sliding rail of the mounting plate through a support leg.

As a preferred scheme, the seat tube mounting base is provided at one end of the mounting plate, the main lock body is fixedly provided at one side of the seat tube mounting base, the fixed pulley is fixedly provided at the other side of the seat tube mounting base, the fixed seat is provided at the other end of the mounting plate, and the driving motor and the take-up reel are provided on the fixed seat.

As a preferred scheme, the seat tube mounting base is provided at one end of the mounting plate, the main lock body is fixedly provided at one side of the seat tube mounting base, the driving motor and the take-up reel are provided at the other side of the seat tube mounting base, and the fixed pulley is fixedly provided at the other side of the seat tube mounting base.

As a preferred scheme, the lock rope releasing mechanism is a tension spring, a fixed seat is provided at the other end of the body, one end of the tension spring is fixed on the fixed seat, a movable pulley is provided at the other end of the tension spring, the other end of the lock rope is fixed in the body by bypassing the movable pulley, the body includes an outer tube body and a mounting plate, the mounting plate is fixedly provided in the tube body, the mounting plate is provided with a sliding rail, and the movable pulley is slidably provided on the sliding rail of the mounting plate through a support leg.

As a preferred scheme, the support leg of the movable pulley is provided with an inserting part, the mounting plate is provided with a clamping component and a loosening component, the clamping component is used for clamping the inserting part, and the loosening component is used for causing the clamping component to release the inserting part.

As a preferred scheme, the clamping component consists of two groups of buckles, one end of the buckle is rotatably provided on the mounting plate, the other ends of the two groups of buckles are close together under the action of a torsion spring, so that the inserting part passes through the other ends of the two groups of buckles and the inserting part is clamped, the loosening component includes a button, an oblique pressing block and a compression spring, an inclined surface is provided at one side of the button, one end of the oblique pressing block abuts against the inclined surface of the button, the compression spring causes the oblique pressing block to push the button upwards and press the button, and the button pushes the oblique pressing block to overcome an elastic force of the compression spring, pushes the other ends of the two buckles to be turned on, and releases the inserting part.

As a preferred scheme, a fixed pulley is provided at one side of the seat tube mounting base, the fixed pulley is fixed on the mounting plate or the seat tube mounting base, and the lock rope is wound around the movable pulley and the fixed pulley.

As a preferred scheme, the lock rope releasing mechanism is a tension spring, the tension spring is provided at one side of the seat tube mounting base, the body includes an outer tube body and a mounting plate, the mounting plate is fixedly provided in the tube body, the mounting plate is provided with a sliding rail, one end of the tension spring is fixed on the seat tube mounting base or the mounting plate, the other end of the tension spring is fixed with a movable pulley, the movable pulley is slidably provided on the sliding rail of the mounting plate through a support leg, a fixed seat is provided at the other end of the body, a fixed pulley is provided on the fixed seat, the lock rope is wound around the movable pulley and the fixed pulley, and the other end of the lock rope is fixed in the body.

As a preferred scheme, the seat tube mounting base is provided with a seat tube jack and a locking component, the locking component includes a jacking screw, a cushion block and a pressing block, the pressing block is provided on an inner wall of the seat tube jack, and the jacking screw and the cushion block drive the pressing block through locking connection.

As a preferred scheme, a pull button is provided at one end of the lock head, the pull button includes a sleeve part and a sealing cover, the sleeve part is sleeved at one end of the lock head, and the sealing cover is buckled on the main lock body to cover the lock head hole and the locking hole.

The main beam tube with the built-in lock according to the present disclosure has the following beneficial effects. The lock rope is released by the lock rope releasing mechanism. When the lock head in the lock head hole drives the lock rope to protrude from the cavity and to be inserted into the locking hole after winding a locking object, the lock tongue locks the lock head in the locking hole. The main beam tube is locked with the locking object. The lock tongue is turned on. The lock rope is retracted by the lock rope releasing mechanism. The lock head retracts into the lock head hole, so that the lock rope and the lock head are hidden. The lock rope and the lock head are prevented from being eroded by rain and are uneasy to be damaged. The lock is provided in the body. The main lock body of the lock is provided at one end of the body. The main lock body of the lock is protected by the body, which is excellent in practicability.

### BRIEF DESCRIPTION OF THE DRAWINGS

FIG. 1 is a perspective schematic diagram of a main beam tube with a built-in lock according to Embodiment 1 of the present disclosure.
FIG. 2 is an explosion schematic diagram of a main beam tube with a built-in lock according to Embodiment 1 of the present disclosure.
FIG. 3 is a structural schematic diagram of a seat tube mounting base and a main lock body in a main beam tube with a built-in lock according to Embodiment 1 of the present disclosure.
FIG. 4 is a structural schematic diagram of a seat tube mounting base and a main lock body in a main beam tube with a built-in lock according to Embodiment 1 of the present disclosure from another perspective.
FIG. 5 is an explosion schematic diagram of a main beam tube with a built-in lock according to Embodiment 2 of the present disclosure.
FIG. 6 is a partially schematic diagram of a main beam tube with a built-in lock according to Embodiment 2 of the present disclosure.
FIG. 7 is an explosion schematic diagram of a main beam tube with a built-in lock according to Embodiment 3 of the present disclosure.
FIG. 8 is a structural schematic diagram of a seat tube mounting base, a main lock body and a mounting plate in a main beam tube with a built-in lock according to Embodiment 3 of the present disclosure.
FIG. 9 is a perspective schematic diagram of a main beam tube with a built-in lock according to Embodiment 4 of the present disclosure.
FIG. 10 is a structural schematic diagram of a seat tube mounting base, a main lock body and a mounting plate in a main beam tube with a built-in lock according to Embodiment 4 of the present disclosure.
FIG. 11 is an explosion schematic diagram of FIG. 10.
FIG. 12 is a structural schematic diagram of a mounting plate in a main beam tube with a built-in lock according to Embodiment 4 of the present disclosure.
FIG. 13 is a partial enlarged view of FIG. 12.

### DETAILED DESCRIPTION OF THE EMBODIMENTS

The present disclosure will be further described and illustrated with reference to specific embodiments and attached drawings in the specification:

### Embodiment 1

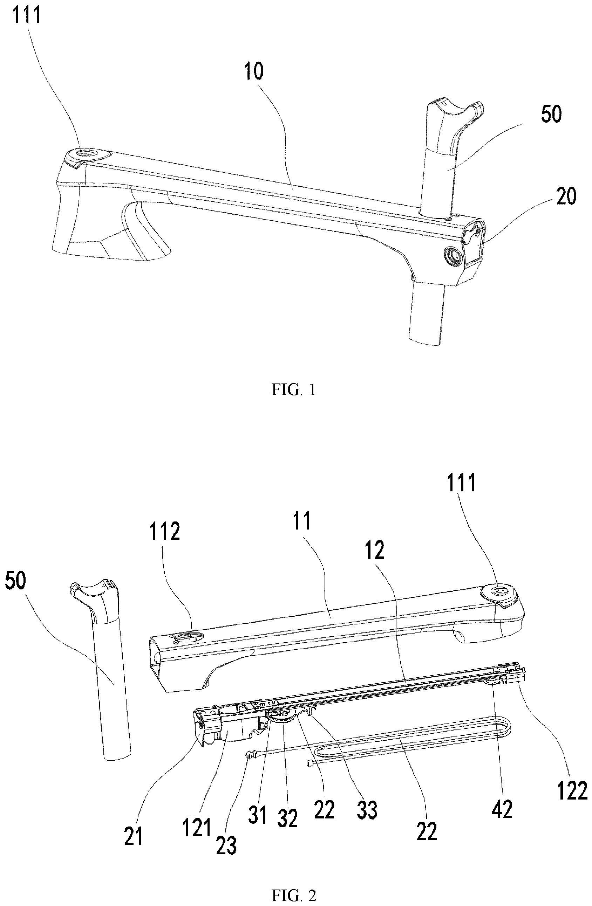

As shown in FIG. 1 to FIG. 4, a main beam tube with a built-in lock is provided, including a body 10, a lock 20, a driver and a take-up reel 32. The lock 20, the driver and the take-up reel 32 are all hidden in the body 10. In this embodiment, the main beam tube with the built-in lock is used on an electric bicycle. The driver is the driving motor 31. The driving motor is powered by the battery on the electric bicycle. The body 10 is provided with a front tube part and a seat tube part. The front tube part is used for mounting a vertical tube, and the seat tube part is used for mounting a seat tube.

As shown in FIG. 2, in order to facilitate the mounting of the lock 20, the driving motor 31 and the take-up reel 32 in the body 10, the body 10 is provided with an outer tube body 11 and a mounting plate 12. The mounting plate 12 is fixedly provided in the outer tube body 11. The outer tube body 11 is provided with a front tube hole 111 and a seat tube hole 112. In this embodiment, the front tube hole 111 and the seat tube hole 112 are provided at both ends of the outer tube body 11, respectively. In other embodiments, the seat tube hole 112 can be provided in the middle of the outer tube body 11.

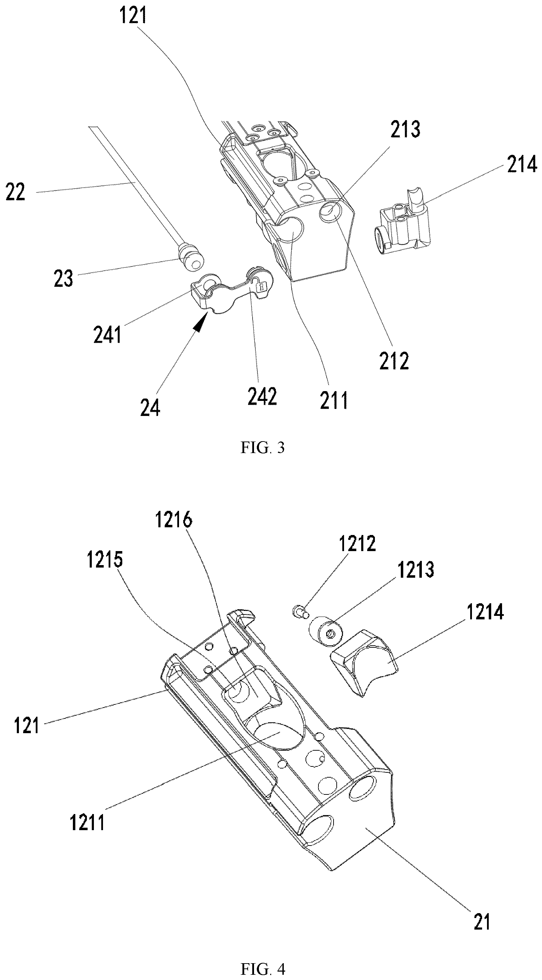

As shown in FIG. 3, the lock 20 includes a lock head 23, a lock rope 22 and a main lock body 21. The main lock body 21 is provided with a lock head hole 211, a locking hole 212 and a lock tongue cavity 213. The lock head hole 211 is used for accommodating the lock head 23. A counter bore is provided at a proximal end of the lock head hole 211, so that the lock head 23 can be fixed in the counter bore when being retracted into the lock head hole 211. The lock tongue cavity 213 is provided with a lock tongue 214. The lock tongue 214 is driven by a mechanical lock or an electromagnetic lock. In this embodiment, the lock tongue 214 is a mechanical lock, and the lock tongue 214 is driven by a key.

In this embodiment, a seat tube mounting base 121 is provided at one end of the mounting plate 12, as shown in FIG. 3 and FIG. 4. The seat tube mounting base 121 is provided with a seat tube jack 1211, a screw mounting hole 1215, a countersunk groove, a pressing block hole 1216 and a locking component. The seat tube jack 1211 corresponds to the seat tube hole 112 on the outer tube body 11. The countersunk groove is provided on the outer surface of the seat tube mounting base 121. The pressing block hole 1216 is provided on the inner wall of the seat tube jack 1211. The screw mounting hole 1215, the countersunk groove, the pressing block hole 1216 and the seat tube jack 1211 are communicated with each other. The countersunk groove and the pressing block hole 1216 are provided at both sides of the screw mounting hole 1215, respectively. Specifically, the countersunk groove is provided at the outer side of the screw mounting hole 1215, and the pressing block hole 1216 is provided at the inner side of the screw mounting hole 1215. The locking component includes a jacking screw 1212, a cushion block 1213 and a pressing block 1214. The cushion block 1213 is provided with a screw through hole. The cushion block 1213 is provided in the countersunk groove. The jacking screw 1212 passes through the screw through hole of the cushion block 1213 and the screw mounting hole 1215 to be screwed with the pressing block 1214 provided in the pressing block hole 1216. The pressing block 1214 fixes the seat tube 50 in the seat tube jack 1211 using the elasticity of the cushion block 1213 by adjusting the jacking screw 1212 and the pressing block 1214. This is one of the ways to fix the seat tube 50. In other embodiments, other fixed structures can be used for fixing the seat tube 50.

The driving motor 31 and the take-up reel 32 are provided at the inner side of the seat tube mounting base 121. The driving motor 31 is used for driving the take-up reel 32 to rotate. In this embodiment, the driving motor 31 and the take-up reel 32 are fixed on the mounting plate 12. In other embodiments, the driving motor 31 and the take-up reel 32 can be fixed on the side wall of the seat tube mounting base 121. The driving motor and the take-up reel 32 are fixed on the mounting plate 12, and then the mounting plate 12 is fixed or welded in the outer tube body 11, so that the convenience of mounting the driving motor and the take-up reel 32 is improved.

The main lock body 21 is provided at the outer side of the seat tube mounting base 121 and in the outer tube body 11. The outer tube body 11 has a protective effect on the main lock body 21. The lock head hole 211 on the main lock body 21 is exposed, so that the lock head 23 of the lock head hole 211 can be taken out conveniently. A pull button 24 is provided at one end of the lock head 23. The pull button 24 includes a sleeve part 241 and a sealing cover 242. The sleeve part 241 is sleeved at one end of the lock head 23. The lock head 23 is pulled out by the pull button 24. The sealing cover 242 is buckled on the main lock body 21 to cover the lock head hole 211 and the locking hole 212, thus preventing the lock head hole 211 and the locking hole 212 from being exposed.

As shown in FIG. 2, a fixed seat 122 is provided at the other end of the mounting plate 12. The fixed pulley 42 is fixedly provided on the fixed seat 122. In other embodiments, the fixed pulley 42 can be directly fixed on the mounting plate 12. The lock rope 22 wound around the take-up reel 32 is fixed to the lock head 23 in the lock head hole 211 through the fixed pulley 42. The lock rope 22 is released or retracted by the forward and reverse rotation of the take-up reel 32. When the lock rope 22 is released, the lock head 23 is pulled out by the pull button 24. The lock head 23 inserts the lock rope 22 into the lock head hole 211 by bypassing the locking object. The lock head 23 is locked by the lock tongue 214, so as to lock the main beam tube with the locking object. The lock tongue 214 is turned on. The driving motor 31 is used for driving the take-up reel 32 to retract the lock rope 22. The lock head 23 retracts into the lock head hole 211, so that the lock rope 22 and the lock head 23 are hidden, which are uneasy to be damaged and are excellent in practicability.

In the above embodiment, the driving motor 31 and the take-up reel 32 are provided at one side of the seat tube mounting base 121, that is, one end of the body 10. The fixed pulley 42 is provided at the other end of the body 10. The positions of the driving motor 31, the take-up reel 32 and the fixed pulley 42 do not affect the operation of the main beam tube with the built-in lock. In other embodiments, the driving motor 31 and the take-up reel 32 can be provided on the fixed seat at the other end of the body 10. The fixed pulley 42 is provided at the end of the tube mounting base 121 of the body 10. The lock rope 22 is guided by the fixed pulley 42.

### Embodiment 2

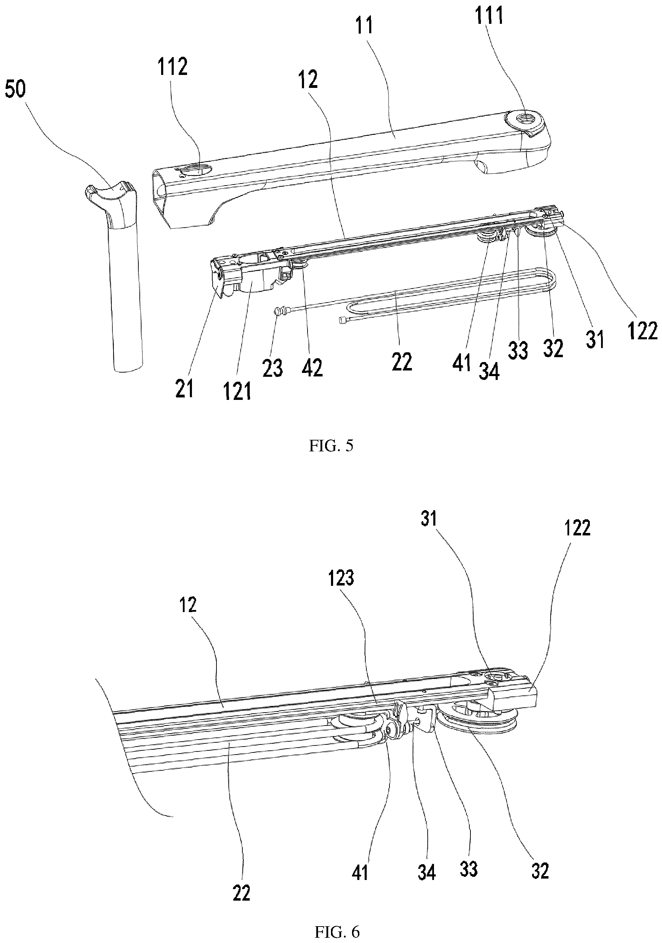

In the above embodiment, the lock rope 22 is released by the rotation of the driving motor 30. The rotation distance of the driving motor 30 is the releasing length of the lock rope 22. In order to improve the releasing speed of the lock rope 22, the present disclosure discloses a main beam tube with a built-in lock, as shown in FIG. 5 and FIG. 6. A main beam tube with a built-in lock includes a body 10, a lock 20, a driving motor 31 and a take-up reel 32. The lock 20, the driving motor 31 and the take-up reel 32 are all hidden in the body 10.

In order to facilitate the mounting of the lock 20, the driving motor 31 and the take-up reel 32 in the body 10, the body 10 is provided with an outer tube body 11 and a mounting plate 12. The mounting plate 12 is fixedly provided in the outer tube body 11. The outer tube body 11 is provided with a front tube hole 111 and a seat tube hole 112. In this embodiment, the front tube hole 111 and the seat tube hole 112 are provided at both ends of the outer tube body 11, respectively.

The lock 20 includes a lock head 23, a lock rope 22 and a main lock body 21. The main lock body 21 is provided with a lock head hole 211, a locking hole 212 and a lock tongue cavity 213. The lock head hole 211 is used for accommodating the lock head 23. A counter bore is provided at a proximal end of the lock head hole 211, so that the lock head 23 can be fixed in the counter bore when being retracted into the lock head hole 211. The lock tongue cavity 213 is provided with a lock tongue 214.

The difference between this embodiment and Embodiment 1 is as follows. A seat tube mounting base 121 is provided at one end of the mounting plate 12. The main lock body 21 is provided at the outer side of the seat tube mounting base 121 and in the outer tube body 11. The outer tube body 11 has a protective effect on the main lock body 21. The lock head hole 211 on the main lock body 21 is exposed, so that the lock head 23 of the lock head hole 211 can be taken out conveniently. A pull button 24 is provided at one end of the lock head 23. The pull button 24 includes a sleeve part 241 and a sealing cover 242. The sleeve part 241 is sleeved at one end of the lock head 23. The lock head 23 is pulled out by the pull button 24. The sealing cover 242 is buckled on the main lock body 21 to cover the lock head hole 211 and the locking hole 212, thus preventing the lock head hole 211 and the locking hole 212 from being exposed. A fixed pulley 42 is provided at an inner side of the seat tube mounting base 121. A fixed seat 122 is provided at the other end of the mounting plate 12. The driving motor 31 and the take-up reel 32 are provided on the fixed seat 122. The mounting plate 12 is further provided with a wire clamping plate 33 and a movable pulley 41. The wire clamping plate 33 is fixed on the mounting plate 12 and is provided between the movable pulley 41 and the take-up reel 32. The wire clamping plate 33 is provided with a threading hole. The mounting plate 12 is provided with a sliding rail 123. The movable pulley 41 is slidably provided on the sliding rail 123 of the mounting plate 12 through a support leg. A pulling rope 34 is wound around the take-up reel 32. One end of the pulling rope 34 is fixed on the movable pulley 41 through the threading hole on the wire clamping plate 33. The take-up reel 32 pulls or loosens the movable pulley 32 through the pulling rope 34.

One end of the lock rope 22 is fixed on the lock head 23, and the other end thereof is wound around the fixed pulley 42 and the movable pulley 32. According to the length requirement of the lock rope 22, the other end of the lock rope 22 is fixed on the fixed pulley 42 or the movable pulley 32.

The pulling rope 34 is released or retracted by the forward and reverse rotation of the take-up reel 32. When the pulling rope 34 is released, the lock head 23 is pulled out by the pull button. The lock rope 22 moves on the mounting plate 12 by driving the movable pulley 32. Due to the movement of the movable pulley 32, the moving distance of the lock head 23 is several times the moving distance of the movable pulley 32 or the releasing length of the pulling rope 34, depending on the number of turns of the lock rope 22 wound around the movable pulley 32 and the fixed pulley 42. The lock head 23 inserts the lock rope 22 into the lock head hole 211 by bypassing the locking object. The lock head 23 is locked by the lock tongue 214, so as to lock the main beam tube with the locking object. The lock tongue 214 is turned on. The driving motor 31 is used for driving the take-up reel 32 to retract the pulling rope 34. The pulling rope 34 drives the movable pulley 32 to move. In this way, the lock head 23 retracts into the lock head hole 211, so that the lock rope 22 and the lock head 23 are hidden, which are uneasy to be damaged and are excellent in practicability.

In the above embodiment, the driving motor 31 and the take-up reel 32 are provided at one side of the fixed seat 122, that is, one end of the body 10. The fixed pulley 42 is provided at the other end of the body 10. The positions of the driving motor 31, the take-up reel 32 and the fixed pulley 42 do not affect the operation of the main beam tube with the built-in lock. In other embodiments, the driving motor 31 and the take-up reel 32 can be provided at the inner side of the seat tube mounting base at the other end of the body 10. The fixed pulley 42 is provided on the fixed seat 122 of the body 10, and the movable pulley 32 is slidably provided on the mounting plate 12, which can still hide the lock rope 22 and the lock head 23.

### Embodiment 3

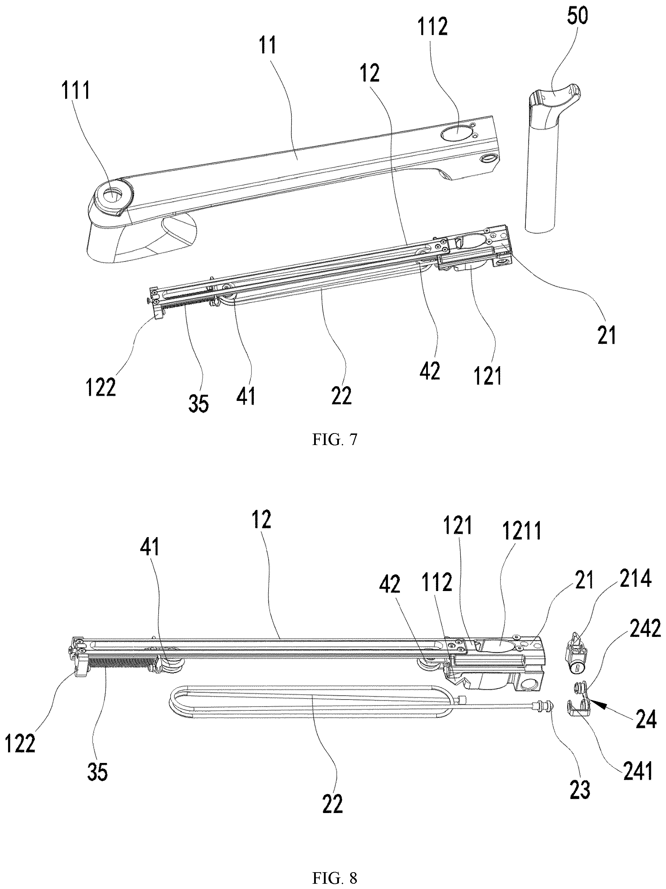

As shown in FIG. 7 to FIG. 8, a main beam tube with a built-in lock includes a body, a lock and a tension spring 35. The lock and the tension spring 35 are both hidden in the body. The body is provided with a front tube part and a seat tube part. The front tube part is used for mounting a vertical tube, and the seat tube part is used for mounting a seat tube.

In order to facilitate the mounting of the lock and the tension spring 35 in the body, the body is provided with an outer tube body 11 and a mounting plate 12. The mounting plate 12 is fixedly provided in the outer tube body 11. The outer tube body 11 is provided with a front tube hole 111 and a seat tube hole 112. In this embodiment, the front tube hole 111 and the seat tube hole 112 are provided at both ends of the outer tube body 11, respectively. In other embodiments, the seat tube hole 112 can be provided in the middle of the outer tube body 11.

The lock includes a lock head 23, a lock rope 22 and a main lock body 21. The main lock body 21 is provided with a lock head hole, a locking hole and a lock tongue cavity. With reference to the above embodiments, the lock head hole is used for accommodating the lock head 23. A counter bore is provided at a proximal end of the lock head hole, so that the lock head 23 can be fixed in the counter bore when being retracted into the lock head hole. The lock tongue cavity is provided with a lock tongue 214. The lock tongue 214 is driven by a mechanical lock or an electromagnetic lock. In this embodiment, the lock tongue 214 is a mechanical lock, and the lock tongue 214 is driven by a key.

In this embodiment, one end of the mounting plate 12 is provided with a seat tube mounting base 121. The seat tube mounting base 121 is integrally formed with the mounting plate 12 or is fixedly connected with the mounting plate by locking screws. The seat tube mounting base 121 is provided with a seat tube jack 1211. The seat tube jack 1211 corresponds to the seat tube hole 112 on the outer tube body 11. There are many ways to fix the seat tube 50 in the seat tube jack 1211, which will not be described in detail in this embodiment. A fixed pulley 42 is provided at an inner side of the seat tube mounting base 121. The fixed pulley 42 is fixed on the mounting plate 12 or the seat tube mounting base 121, and then the mounting plate 12 is fixed or welded in the outer tube body 11, so that the convenience of mounting the fixed pulley is improved. The mounting plate 12 is provided with a sliding rail.

The main lock body 21 is provided at the outer side of the seat tube mounting base 121 and in the outer tube body 11. The outer tube body 11 has a protective effect on the main lock body 21. The lock head hole on the main lock body 21 is exposed, so that the lock head 23 of the lock head hole can be taken out conveniently. A pull button 24 is provided at one end of the lock head 23. The pull button 24 includes a sleeve part 241 and a sealing cover 242. The sleeve part 241 is sleeved at one end of the lock head 23. The lock head 23 is pulled out by the pull button 24. The sealing cover 242 is buckled on the main lock body 21 to cover the lock head hole and the locking hole, thus preventing the lock head hole and the locking hole from being exposed.

A fixed seat 122 is provided at the other end of the mounting plate 12. A tension spring 35 is fixedly provided on the fixed seat 122. One end of the tension spring 35 is fixed on the fixed seat 122, and the other end thereof is fixed with a movable pulley 41. The movable pulley 41 is slidably provided on the sliding rail of the mounting plate 12 through a support leg. The lock rope 22 is wound around the movable pulley 41 and the fixed pulley 42. One end of the lock rope 22 is fixed on the lock head 23, and the other end thereof is fixed on the fixed seat 122 or the seat tube mounting base 121. The number of turns of the lock rope 22 wound around the movable pulley 41 and the fixed pulley 42 is determined according to the required length. The lock rope 22 is released or retracted by the elastic deformation of the tension spring 35. The lock head 23 is pulled out by the pull button 24. The movable pulley 41 moves on the sliding rail of the mounting plate 12 against the elastic force of the tension spring 35. Since the distance between the movable pulley 41 and the fixed pulley 42 is shortened, the protruding distance of the lock rope 22 is enlarged by the number of turns of the lock rope 22 wound around the movable pulley 41 and the fixed pulley 42. The lock rope 22 is inserted into the lock head hole 211 by bypassing the locking object. The lock head 23 is locked by the lock tongue 214, so as to lock the main beam tube with the locking object. The lock tongue 214 is turned on. The lock rope 22 is retracted by the elastic force of the tension spring 35. The lock head 23 retracts into the lock head hole 211, so that the lock rope 22 and the lock head 23 are hidden, which are uneasy to be damaged and are excellent in practicability.

In the above embodiment, when the length of the lock rope 22 does not need to be too long or the elastic deformation of the tension spring 35 is large enough, the fixed pulley 42 can be omitted, and the lock rope 22 can protrudes directly by the movement of the movable pulley 41. In other embodiments, the positions of the tension spring 35, the movable pulley 41 and the fixed pulley 42 can be interchanged. That is, the fixed pulley 42 is provided on the fixed seat 122, the tension spring 35 is provided at the inner side of the seat tube mounting base 121, and the movable pulley 41 is provided at one end of the tension spring 35. The lock rope 22 can protrude or retract through the elastic deformation of the tension spring 35.

### Embodiment 4

In order to lock the lock, it is necessary to keep the lock rope 22 in a protruded length to prevent the lock rope 22 from retracting when the lock rope 22 is extended.

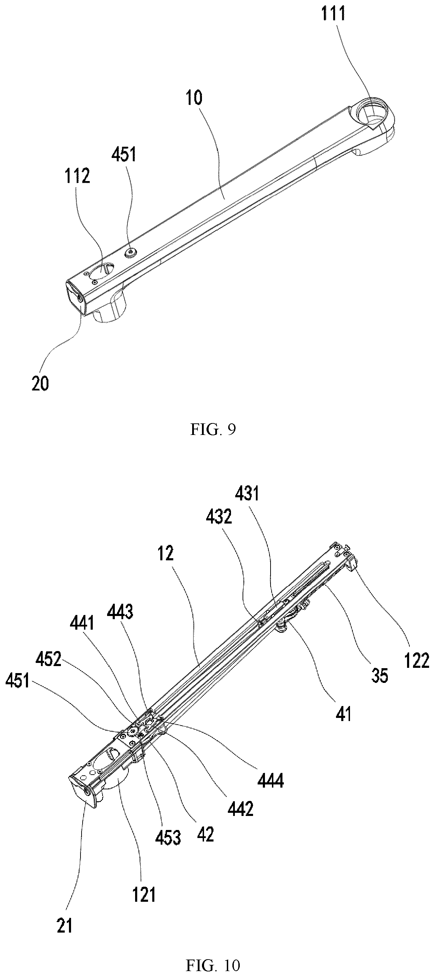

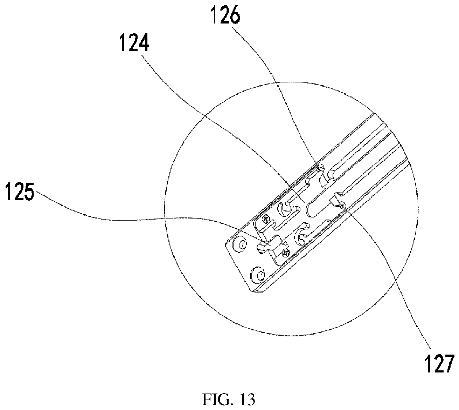

As shown in FIG. 9 to FIG. 13, a main beam tube with a built-in lock includes a body, a lock and a tension spring 35. The lock and the tension spring 35 are both hidden in the body. The body is provided with a front tube part and a seat tube part. The front tube part is used for mounting a vertical tube, and the seat tube part is used for mounting a seat tube.

The lock includes a lock head, a lock rope 22 and a main lock body 21. The main lock body 21 is provided with a lock head hole, a locking hole and a lock tongue cavity. With reference to the above embodiments, the lock head hole is used for accommodating the lock head 23. A counter bore is provided at a proximal end of the lock head hole, so that the lock head 23 can be fixed in the counter bore when being retracted into the lock head hole. The lock tongue cavity is provided with a lock tongue 214. The lock tongue 214 is driven by a mechanical lock or an electromagnetic lock. In this embodiment, the lock tongue 214 is a mechanical lock, and the lock tongue 214 is driven by a key.

In this embodiment, as shown in FIG. 9 and FIG. 10, one end of the mounting plate 12 is provided with a seat tube mounting base 121. The seat tube mounting base 121 is integrally formed with the mounting plate 12 or is fixedly connected with the mounting plate by locking screws. The seat tube mounting base 121 is provided with a seat tube jack. The seat tube jack corresponds to the seat tube hole 112 on the outer tube body 11. There are many ways to fix the seat tube 50 in the seat tube jack 1211, which will not be described in detail in this embodiment. A fixed pulley 42 is provided at an inner side of the seat tube mounting base 121. The fixed pulley 42 is fixed on the mounting plate 12 or the seat tube mounting base 121, and then the mounting plate 12 is fixed or welded in the outer tube body 11, so that the convenience of mounting the fixed pulley is improved. The mounting plate 12 is provided with a sliding rail, which can refer to Embodiment 3.

The main lock body 21 is provided at the outer side of the seat tube mounting base 121 and in the outer tube body 11. The outer tube body 11 has a protective effect on the main lock body 21. The lock head hole on the main lock body 21 is exposed, so that the lock head of the lock head hole can be taken out conveniently. A pull button 24 is provided at one end of the lock head. The pull button 24 includes a sleeve part 241 and a sealing cover 242. The sleeve part 241 is sleeved at one end of the lock head. The lock head is pulled out by the pull button 24. The sealing cover is buckled on the main lock body 21 to cover the lock head hole and the locking hole, thus preventing the lock head hole and the locking hole from being exposed.

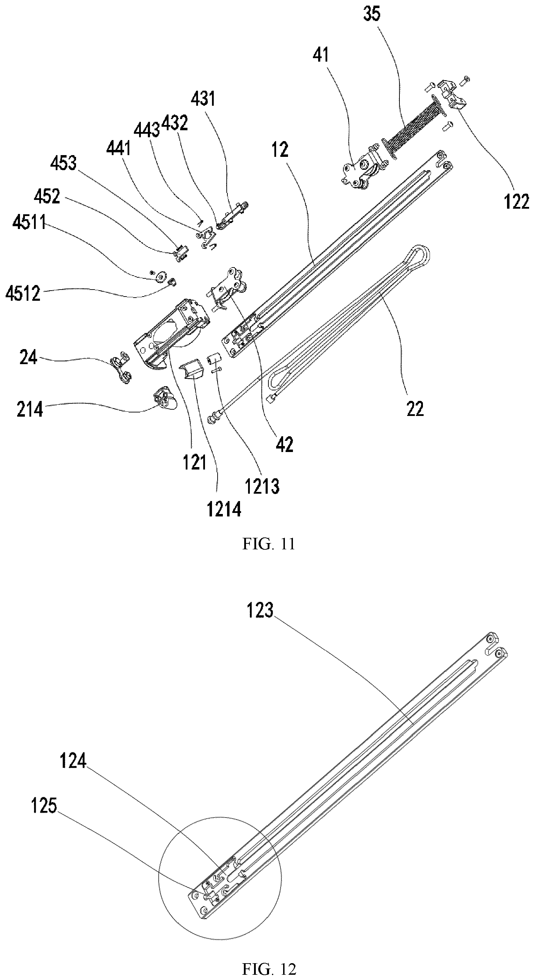

A fixed seat 122 is provided at the other end of the mounting plate 12. A tension spring 35 is fixedly provided on the fixed seat 122. One end of the tension spring 35 is fixed on the fixed seat 122, and the other end thereof is fixed with a movable pulley 41. The movable pulley 41 is slidably provided on the sliding rail 123 of the mounting plate 12 through a support leg. As shown in FIG. 12, the lock rope 22 is wound around the movable pulley 41 and the fixed pulley 42. One end of the lock rope 22 is fixed on the lock head, and the other end thereof is fixed on the fixed seat 122 or the seat tube mounting base 121. The number of turns of the lock rope 22 wound around the movable pulley 41 and the fixed pulley 42 is determined according to the required length. The lock rope 22 is released or retracted by the elastic deformation of the tension spring 35. The lock head is pulled out by the pull button 24. The movable pulley 41 moves on the sliding rail 123 of the mounting plate 12 against the elastic force of the tension spring 35. Since the distance between the movable pulley 41 and the fixed pulley 42 is shortened, the protruding distance of the lock rope 22 is enlarged by the number of turns of the lock rope 22 wound around the movable pulley 41 and the fixed pulley 42. The lock rope 22 is inserted into the lock head hole 211 by bypassing the locking object. The lock head is locked by the lock tongue 214, so as to lock the main beam tube with the locking object. The lock tongue 214 is turned on. The lock rope 22 is retracted by the elastic force of the tension spring 35. The lock head 23 retracts into the lock head hole 211, so that the lock rope 22 and the lock head 23 are hidden, which are uneasy to be damaged and are excellent in practicability.

The difference between this embodiment and Embodiment 3 is as follows. A slider 431 is provided on the support leg of the movable pulley 41. An inserting part 432 is provided on the slider 431. The inserting part 432 is wide at one end and narrow at the other end. In this embodiment, the inserting part, which is in the shape of an arrow, moves with the slider 431. The mounting plate 12 is provided with a groove 124 and a button hole 125. The mounting plate 12 is provided with a clamping component and a loosening component. The clamping component is used for clamping the inserting part 432, and the loosening component is used for causing the clamping component to release the inserting part 432.

The clamping component consists of two groups of buckles 441, 442 and torsion springs 443, 444. The buckles 441, 442 are provided in the groove 124. The two buckles 441, 442 have arc structures, which are matched with the arc structures at the end of the groove 124, so that one end of the buckles 441, 442 is rotatably provided in the groove 124 of the mounting plate 12. The torsion springs 443, 444 are respectively provided on the two fixed columns 126 and 127 of the groove 124. The other ends of the two groups of buckles 441, 442 are close together under the action of torsion springs 443, 444. When the lock rope 22 pulls the movable pulley 41, the inserting part 432 passes through the other ends of the two buckles 441, 442, overcoming the force exerted by the torsion springs 443, 444 on the buckles 441, 442. The other ends of the buckles 41, 442 are turned on. The buckles 41, 442 is clamped with the inserting part 432, so that the tension spring 35 is in an extended state, which facilitates the locking of the lock head in the lock head hole. The loosening component includes a button 451, an oblique pressing block 452 and a compression spring 453. The button 451 is provided in the button hole 125. The button 451 includes a pressing part 4511 and a button body 4512. In this embodiment, the pressing part 4511 and the button body 4512 are fixed by screws, and are clamped in the button hole 125 by the shapes of the button body 4512 and the pressing part 4511. An inclined surface is provided at one side of the button body 4512. One end of the oblique pressing block 452 abuts against the inclined surface of the button 451. The compression spring 453 causes the oblique pressing block 452 to push the button 451 upwards and press the button 451. The button 451 pushes the oblique pressing block 452 to overcome an elastic force of the compression spring 453, pushes the other ends of the two buckles 441, 442 to be turned on, and releases the inserting part 432. In this embodiment, due to the tension of the tension spring 35 and the friction between the buckles 441, 442 and the inserting part 432, a strong force is required when the button 451 is pressed to push the oblique pressing block 452 and push the buckles 441, 442. The angle of the inclined surface at the side of the button body 4512 is set, so that the pressing button 451 cannot easily push the oblique pressing block 452. The friction between the buckles 441, 442 and the inserting part 432 is reduced by stretching the tension spring 35, so as to press the button 451. In this way, the buckles 441, 442 release the inserting part 432, so as to prevent the inserting part 432 from being released rapidly.

Finally, it should be noted that the above embodiments are only used to illustrate the technical scheme of the present disclosure, rather than limit the scope of protection of the present disclosure. Although the present disclosure has been described in detail with reference to the preferred embodiments, it should be understood by those skilled in the art that the technical scheme of the present disclosure can be modified or replaced by equivalents without departing from the essence and scope of the technical scheme of the present disclosure.

## Claims

1. A main beam tube with a built-in lock, comprising a body, wherein the body is provided with a seat tube mounting base, a cavity is provided in the body; and further comprising a lock and a lock rope releasing mechanism, wherein the lock and the lock rope releasing mechanism are provided in the body, the lock comprises a lock head, a lock rope and a main lock body, the main lock body is provided at one end of the body, the main lock body is provided with a lock head hole, a locking hole and a lock tongue cavity, the lock head hole is used for accommodating the lock head, the lock tongue cavity is provided with a lock tongue, when the lock head protrudes from the lock head hole and is inserted into the locking hole, the lock tongue is capable of locking the lock head in the locking hole, the lock head is provided at one end of the lock rope, the other end of the lock rope is fixed, the lock rope is provided in the cavity of the body, and the lock rope releasing mechanism is used for releasing or retracting the lock rope.

2. The main beam tube with the built-in lock according to claim 1, wherein the lock rope releasing mechanism comprises a driving motor and a take-up reel, the driving motor is used for driving the take-up reel, when the lock head drives the lock rope to protrude from the cavity, the driving motor is used for driving the take-up reel to release the lock rope, and when the lock rope needs to be retracted in the cavity, the driving motor is used for driving the take-up reel to retract the lock rope.

3. The main beam tube with the built-in lock according to claim 2, wherein a fixed seat is provided at the other end of the body, the driving motor and the take-up reel are provided at the end of the body which is provided with the fixed seat, and the lock rope is wound around the take-up reel.

4. The main beam tube with the built-in lock according to claim 3, wherein the seat tube mounting base is provided with a fixed pulley, and the fixed pulley is used for guiding the lock rope.

5. The main beam tube with the built-in lock according to claim 2, further comprising a fixed pulley and a movable pulley, wherein the fixed pulley and the take-up reel are located at both ends of the body, respectively, the movable pulley is slidably provided in the body, a pulling rope is wound around the take-up reel, the movable pulley is fixed at one end of the pulling rope, and the take-up reel pulls or loosens the movable pulley through the pulling rope.

6. The main beam tube with the built-in lock according to claim 5, wherein the body comprises an outer tube body and a mounting plate, the mounting plate is fixedly provided in the tube body, the mounting plate is provided with a sliding rail, and the movable pulley is slidably provided on the sliding rail of the mounting plate through a support leg.

7. The main beam tube with the built-in lock according to claim 6, wherein the seat tube mounting base is provided at one end of the mounting plate, the main lock body is fixedly provided at one side of the seat tube mounting base, the fixed pulley is fixedly provided at the other side of the seat tube mounting base, the fixed seat is provided at the other end of the mounting plate, and the driving motor and the take-up reel are provided on the fixed seat.

8. The main beam tube with the built-in lock according to claim 6, wherein the seat tube mounting base is provided at one end of the mounting plate, the main lock body is fixedly provided at one side of the seat tube mounting base, the driving motor and the take-up reel are provided at the other side of the seat tube mounting base, and the fixed pulley is fixedly provided at the other side of the seat tube mounting base.

9. The main beam tube with the built-in lock according to claim 1, wherein the lock rope releasing mechanism is a tension spring, a fixed seat is provided at the other end of the body, one end of the tension spring is fixed on the fixed seat, a movable pulley is provided at the other end of the tension spring, the other end of the lock rope is fixed in the body by bypassing the movable pulley, the body comprises an outer tube body and a mounting plate, the mounting plate is fixedly provided in the tube body, the mounting plate is provided with a sliding rail, and the movable pulley is slidably provided on the sliding rail of the mounting plate through a support leg.

10. The main beam tube with the built-in lock according to claim 9, wherein the support leg of the movable pulley is provided with an inserting part, the mounting plate is provided with a clamping component and a loosening component, the clamping component is used for clamping the inserting part, and the loosening component is used for causing the clamping component to release the inserting part.

11. The main beam tube with the built-in lock according to claim 10, wherein the clamping component consists of two groups of buckles, one end of the buckle is rotatably provided on the mounting plate, the other ends of the two groups of buckles are close together under the action of a torsion spring, so that the inserting part passes through the other ends of the two groups of buckles and the inserting part is clamped, the loosening component comprises a button, an oblique pressing block and a compression spring, an inclined surface is provided at one side of the button, one end of the oblique pressing block abuts against the inclined surface of the button, the compression spring causes the oblique pressing block to push the button upwards and press the button, and the button pushes the oblique pressing block to overcome an elastic force of the compression spring, pushes the other ends of the two buckles to be turned on, and releases the inserting part.

12. The main beam tube with the built-in lock according to claim 9, wherein a fixed pulley is provided at one side of the seat tube mounting base, the fixed pulley is fixed on the mounting plate or the seat tube mounting base, and the lock rope is wound around the movable pulley and the fixed pulley.

13. The main beam tube with the built-in lock according to claim 1, wherein the lock rope releasing mechanism is a tension spring, the tension spring is provided at one side of the seat tube mounting base, the body comprises an outer tube body and a mounting plate, the mounting plate is fixedly provided in the tube body, the mounting plate is provided with a sliding rail, one end of the tension spring is fixed on the seat tube mounting base or the mounting plate, the other end of the tension spring is fixed with a movable pulley, the movable pulley is slidably provided on the sliding rail of the mounting plate through a support leg, a fixed seat is provided at the other end of the body, a fixed pulley is provided on the fixed seat, the lock rope is wound around the movable pulley and the fixed pulley, and the other end of the lock rope is fixed in the body.

14. The main beam tube with the built-in lock according to claim 1, wherein the seat tube mounting base is provided with a seat tube jack and a locking component, the locking component comprises a jacking screw, a cushion block and a pressing block, the pressing block is provided on an inner wall of the seat tube jack, and the jacking screw and the cushion block drive the pressing block through locking connection.

15. The main beam tube with the built-in lock according to claim 1, wherein a pull button is provided at one end of the lock head, the pull button comprises a sleeve part and a sealing cover, the sleeve part is sleeved at one end of the lock head, and the sealing cover is buckled on the main lock body to cover the lock head hole and the locking hole.
